# EUROPEAN PATENT APPLICATION

(11) **EP 4 661 263 A1**
(43) Date of publication of application: **10.12.2025**
(21) Application number: 23919629.8
(22) Date of filing: 31.01.2023
(51) Int. Cl.: H02K 49/10, H02K 49/02

(54) **EDDY CURRENT-TYPE SPEED REDUCER**

(71) Applicant: NIPPON STEEL CORPORATION, Chiyoda-ku Tokyo 100-8071 (JP)
(72) Inventor: NOGAMI, Hiroshi, Tokyo 100-8071 (JP); YAMADA, Tetsuya, Tokyo 100-8071 (JP); IMANISHI, Kenji, Tokyo 100-8071 (JP); FUJITA, Takuya, Tokyo 100-8071 (JP); KADOKAWA, Shotaro, Tokyo 100-8071 (JP); KIMURA, Yukihiko, Tokyo 100-8071 (JP)
(74) Representative: Zimmermann & Partner Patentanwälte mbB
(86) International application number: PCT/JP2023/002977
(87) International publication number: WO 2024/161485

(57) **Abstract**

An eddy current retarder (100) includes a braking member (10), permanent magnets (40), and pole pieces (50). Each of the pole pieces (50) includes an inner circumferential surface (51). The inner circumferential surface (51) faces, in a braking state, one of the permanent magnets (40) with a gap in the radial direction of the braking member (10). The inner circumferential surface (51) includes a first region (511) and a second region (512). The first region (511) is separated in the radial direction from the permanent magnet (40) at an increasing distance toward a front end side in the direction (R1) of rotation of the permanent magnet (40) relative to the pole piece (50) when switching from a non-braking state to the braking state in a manner such that the gap between the inner circumferential surface (51) and the permanent magnet (40) is larger on the front end side than at the center (C1). The second region (512) is separated in the radial direction from the permanent magnet (40) at an increasing distance toward a rear end side in the rotation direction (R1) in a manner such that the gap between the inner circumferential surface (51) and the permanent magnet (40) is larger on the rear end side than at the center (C1).

## Description

### TECHNICAL FIELD

The present disclosure relates to an eddy current retarder

### BACKGROUND ART

Eddy current retarders are conventionally used, for example, as auxiliary brakes for large vehicles such as trucks and buses. Typically, eddy current retarders include a cylindrical braking member fixed to the rotary shaft of the vehicle and a plurality of permanent magnets disposed on the inner side of the braking member. A plurality of pole pieces are disposed between the braking member and the permanent magnets.

When such an eddy current retarder is in a braking state, the magnetic fluxes from the permanent magnets reach the braking member through the pole pieces and generates an eddy current on the surface of the braking member. The interaction between the eddy current and the magnetic fluxes generate a braking torque in the braking member in the direction opposite to the rotation direction. On the other hand, when the eddy current retarder is in a non-braking state, a magnetic circuit is formed between the permanent magnets and the pole pieces, and the magnetic fluxes from the permanent magnets do not reach the braking member. Therefore, no braking torque is generated in the braking member. By changing the relative positions of the permanent magnets and the pole pieces, the braking and non-braking states of the eddy current retarder are switched.

As described in Patent Literature 1, for example, by rotating the permanent magnets with respect to the pole pieces, it is possible to switch the braking and non-braking states of the eddy current retarder. In an eddy current retarder of Patent Literature 1, a magnet support member supporting the permanent magnets is rotated to switch the braking and non-braking states thereof. Patent Literature 1 discloses that there are notches in the surfaces of the pole pieces on the permanent magnet side. The notches are provided only on the front end side of the pole pieces in the rotation direction of the magnet support member when switching from the non-braking state to the braking state. According to the disclosure of Patent Literature 1, these notches disperse the magnetic flux flow between the permanent magnets and the pole pieces, suppressing the peak of the magnetic flux flow and reducing the force required to switch from the non-braking state to the braking state.

### CITATION LIST

### PATENT LITERATURE

Patent Literature 1: JP 5825428B

### SUMMARY OF INVENTION

### TECHNICAL PROBLEM

In recent years, due to the development of electric-powered vehicles, batteries and other components have become larger, and the space in the lower part of the vehicles has become smaller. Since eddy current retarders are often arranged in lower portions of vehicles, downsizing the eddy current retarders is required. However, when downsizing eddy current retarders, the braking torque must be maintained.

When downsizing an eddy current retarder, especially reducing the diameter thereof, while maintaining the braking torque, it is necessary to increase the amount of eddy current generation in the braking member by the amount of reduction in the diameter of the retarder. For example, by increasing the number of permanent magnets, using a highly conductive material for the braking member, installing an acceleration mechanism in the braking member, or performing other measures, the amount of eddy current generation can be increased.

However, the larger the amount of eddy current generation in the braking member is, the larger the diamagnetic field formed by the eddy currents is. The effect of this diamagnetic field increases the force (switching force) required to switch the eddy current retarder from the non-braking state to the braking state. For an increased switching force, a larger actuator may be used to switch between the braking and non-braking states. In order to downsize the eddy current retarder without reducing the braking torque, the switching force to switch from the non-braking state to the braking state needs to be reduced more than in conventional cases. On the other hand, when switching the eddy current retarder from the braking state to the non-braking state, the switching force is maximized in a state where the braking member does not rotate and no eddy current is generated, i.e., in a state where no diamagnetic field is formed by eddy currents, so the problem of increased switching force due to a diamagnetic field does not arise.

The present disclosure aims to provide an eddy current retarder that can have a reduced switching force to switch from a non-braking state to a braking state while securing a braking torque.

### SOLUTION TO PROBLEM

An eddy current retarder according to the present disclosure includes a braking member, a plurality of permanent magnets, and a plurality of pole pieces. The braking member has a cylindrical shape. The braking member is attached to a rotary shaft. The plurality of permanent magnets are disposed on an inner side of the braking member in a radial direction. The plurality of permanent magnets are lined up in a circumferential direction of the braking member. The plurality of pole pieces are disposed between the braking member and the permanent magnets in the radial direction. The plurality of pole pieces are lined up in the circumferential direction. Each of the permanent magnets has magnetic poles that are arranged in the radial direction. The magnetic poles of each permanent magnet are reversed with respect to magnetic poles of other permanent magnets adjacent in the circumferential direction. The permanent magnets are configured to rotate in the circumferential direction relative to the pole pieces to switch the eddy current retarder between a braking state and a non-braking state. Each of the pole pieces includes an inner circumferential surface, an outer circumferential surface, and two side surfaces. The inner circumferential surface faces, in the braking state, one of the permanent magnets with a gap in the radial direction. The outer circumferential surface is located on an outer side of the inner circumferential surface in the radial direction. The two side surfaces connect the inner circumferential surface and the outer circumferential surface. The inner circumferential surface includes a first region and a second region. The first region is located forward of a center of the inner circumferential surface in a rotation direction of rotation of the permanent magnets relative to the pole pieces when the eddy current retarder switches from the non-braking state to the braking state. The first region is separated in the radial direction from the permanent magnet that the inner circumferential surface faces at an increasing distance toward a front end side of the inner circumferential surface in the rotation direction in a manner such that the gap is larger on the front end side than at the center. The second region is located rearward of the center of the inner circumferential surface in the rotation direction. The second region is separated in the radial direction from the permanent magnet that the inner circumferential surface faces at an increasing distance toward a rear end side of the inner circumferential surface in the rotation direction in a manner such that the gap is larger on the rear end side than at the center.

### ADVANTAGEOUS EFFECTS OF INVENTION

The eddy current retarder according to the present disclosure can have a reduced switching force to switch from a non-braking state to a braking state while securing a braking torque.

### BRIEF DESCRIPTION OF DRAWINGS

[FIG. 1] FIG. 1 is a longitudinal cross-sectional view showing a schematic configuration of an eddy current retarder according to an embodiment.
[FIG. 2] FIG. 2 is a partial transverse cross-sectional view of the retarder shown in FIG. 1 in a braking state.
[FIG. 3] FIG. 3 is a partial transverse cross-sectional view of the retarder shown in FIG. 1 in a non-braking state.
[FIG. 4] FIG. 4 is an enlarged view of a portion of FIG. 2.
[FIG. 5A] FIG. 5A is a schematic diagram illustrating the effects of the eddy current retarder according to the embodiment.
[FIG. 5B] FIG. 5B is an enlarged view of a portion of FIG. 5A.
[FIG. 6] FIG. 6 is a schematic diagram showing, in magnetic field analysis of a first example, a transverse cross-section of an eddy current retarder of a comparative example.
[FIG. 7] FIG. 7 is a graph showing the switching forces to switch from OFF to ON when the rotation speed of a braking member is 3600 rpm, for the comparative example and Example 1 in the magnetic field analysis of the first example.
[FIG. 8] FIG. 8 is a graph showing the maximum switching forces for the comparative example and Example 1.
[FIG. 9] FIG. 9 is a graph showing the braking torques when the rotation speed of the braking member is 3600 rpm, for the comparative example and Example 1.
[FIG. 10] FIG. 10 is a schematic diagram showing, in magnetic field analysis of a second example, a transverse cross-section of an eddy current retarder of Example 2.
[FIG. 11] FIG. 11 is a graph showing the switching forces to switch from OFF to ON when the rotation speed of the braking member is 3600 rpm, for Example 1 and Example 2 in the magnetic field analysis of the second example.
[FIG. 12] FIG. 12 is a graph showing the maximum switching forces for Example 1 and Example 2.
[FIG. 13] FIG. 13 is a graph showing the braking torques when the rotation speed of the braking member is 3600 rpm, for Example 1 and Example 2.
[FIG. 14] FIG. 14 is a schematic diagram showing the magnetic fluxes flowing from a permanent magnet into a pole piece and a braking member when an eddy current retarder according to a conventional example is in a braking state.
[FIG. 15] FIG. 15 is a schematic diagram showing the magnetic fluxes flowing from a permanent magnet into a pole piece and the braking member when the eddy current retarder according to Example 1 is in a braking state.
[FIG. 16A] FIG. 16A is a diagram showing the positional relationship between permanent magnets and pole pieces of a conventional eddy current retarder when the eddy current retarder switches from a non-braking state to a braking state.
[FIG. 16B] FIG. 16B is an enlarged view of a portion of FIG. 16A.

### DESCRIPTION OF EMBODIMENTS

When an eddy current retarder switches from a non-braking state to a braking state, a plurality of permanent magnets rotate relative to a plurality of pole pieces along a circumferential direction of a braking member. Each of the permanent magnets moves relative to the pole pieces, for example, from a state in which it is positioned so as to bridge two pole pieces adjacent to each other in the circumferential direction to a state in which it faces a single pole piece. This change in the relative position of the permanent magnets and the pole pieces allows the magnetic fluxes from the permanent magnets to reach the braking member, which rotates together with a rotary shaft, generating eddy currents in the braking member. However, while the eddy current retarder is being switched from the non-braking state to the braking state, the diamagnetic field generated by the eddy currents acts to prevent the magnetic fluxes from the permanent magnets from reaching the braking member. That is to say, the magnetic fluxes entering the pole pieces from the permanent magnets are affected by the diamagnetic field and tend to be biased toward the inner circumferential surfaces of the pole pieces.

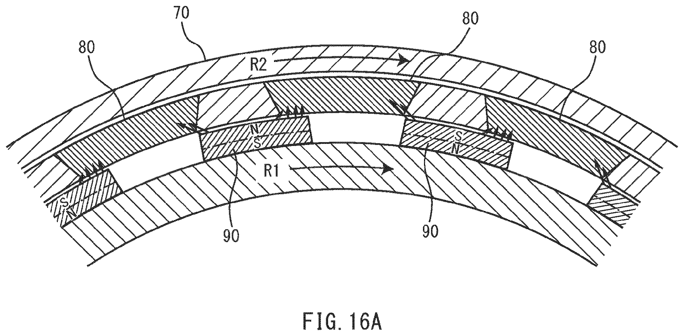

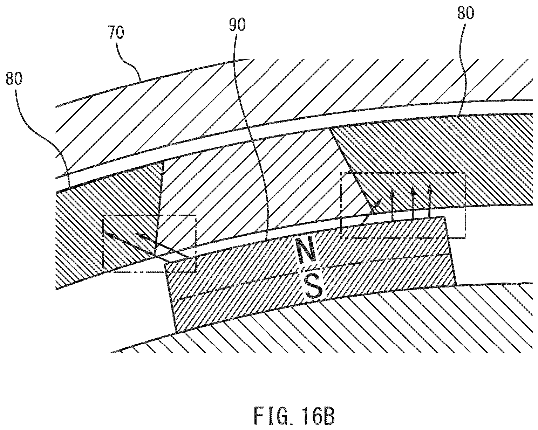

FIG. 16A is a diagram of a conventional eddy current retarder, showing the positional relationship between permanent magnets 90 and pole pieces 80 when the eddy current retarder switches from a non-braking state to a braking state. FIG. 16B is an enlarged view of a portion of FIG. 16A, showing one permanent magnet 90 and the vicinity thereof. FIGS. 16A and 16B show an example where a rotation direction R1 of the permanent magnets 90 with respect to the pole pieces 80 matches a rotation direction R2 of a braking member 70. According to the considerations of the inventors, when the eddy current retarder switches from the non-braking state to the braking state, a magnetic flux flow that is biased toward the pole pieces 80 and prevents rotation of the permanent magnet 90 tends to be formed while portions of each permanent magnet 90 on both sides in the rotation direction R1 remain facing the pole pieces 80. More specifically, as shown in FIGS. 16A and 16B, when the rear end side of each permanent magnet 90 in the rotation direction R1 of the permanent magnets 90 faces the front end side of the inner circumferential surface of one pole piece 80, and the front end side of that permanent magnet 90 faces the inner circumferential surface of another pole piece 80, the magnetic fluxes moving from the permanent magnet 90 toward the pole piece 80 are concentrated on the rear end side of the permanent magnet 90 and the front end side of the inner circumferential surface of the pole piece 80, and the magnetic flux flow is inclined from the radial direction to the opposite side of the rotation direction R1. As indicated by the arrows in FIGS. 16A and 16B, the attractive force of the pole piece 80 on the permanent magnet 90 acts along the magnetic flux flow, and thus serves as a resistive force when rotating the permanent magnet 90. The attractive force of the pole piece 80 is strongly affected by the distance between the permanent magnet 90 and a portion at which the magnetic fluxes are concentrated, in addition to the magnitude of the density of the magnetic fluxes concentrated on the surface of the pole piece 80. The attractive force of the pole piece 80 increases the closer the portion at which the magnetic fluxes are concentrated is to the surface of permanent magnet 90.

On the other hand, on the front end side of the permanent magnet 90, the permanent magnet 90 faces the pole piece 80 over a relatively large area, and thus the magnetic fluxes from the permanent magnet 90 to the pole piece 80 flow mainly in the radial direction. Accordingly, on the front end side of the permanent magnet 90, the attractive force from the pole piece 80 acts mainly in the radial direction, and is not likely to serve as the resistive force when rotating the permanent magnet 90.

The inventors have completed the eddy current retarder according to an embodiment after repeated considerations of electromagnetism as described above and studies based on magnetic field analysis.

The eddy current retarder according to the embodiment includes a braking member, a plurality of permanent magnets, and a plurality of pole pieces. The braking member has a cylindrical shape. The braking member is attached to a rotary shaft. The plurality of permanent magnets are disposed on an inner side of the braking member in a radial direction. The plurality of permanent magnets are lined up in a circumferential direction of the braking member. The plurality of pole pieces are disposed between the braking member and the permanent magnets in the radial direction. The plurality of pole pieces are lined up in the circumferential direction. Each of the permanent magnets has magnetic poles that are arranged in the radial direction. The magnetic poles of each permanent magnet are reversed with respect to magnetic poles of other permanent magnets adjacent in the circumferential direction. The permanent magnets are configured to rotate in the circumferential direction relative to the pole pieces to switch the eddy current retarder between a braking state and a non-braking state. Each of the pole pieces includes an inner circumferential surface, an outer circumferential surface, and two side surfaces. The inner circumferential surface faces, in the braking state, one of the permanent magnets with a gap in the radial direction. The outer circumferential surface is located on an outer side of the inner circumferential surface in the radial direction. The two side surfaces connect the inner circumferential surface and the outer circumferential surface. The inner circumferential surface includes a first region and a second region. The first region is located forward of a center of the inner circumferential surface in a rotation direction of rotation of the permanent magnets relative to the pole pieces when the eddy current retarder switches from the non-braking state to the braking state. The first region is separated in the radial direction from the permanent magnet that the inner circumferential surface faces at an increasing distance toward a front end side of the inner circumferential surface in the rotation direction in a manner such that the gap is larger on the front end side than at the center. The second region is located rearward of the center of the inner circumferential surface in the rotation direction. The second region is separated in the radial direction from the permanent magnet that the inner circumferential surface faces at an increasing distance toward a rear end side of the inner circumferential surface in the rotation direction in a manner such that the gap is larger on the rear end side than at the center (first configuration).

In the eddy current retarder according to the first configuration, each of the pole pieces includes, on the inner circumferential surface thereof, the first region. The first region is a region on the inner circumferential surface of the pole piece that is located forward of the center thereof in the direction of rotation of the permanent magnets relative to the corresponding pole piece. With the first region, the gap between the inner circumferential surface of the pole piece and the permanent magnet is larger at the front end side in the rotation direction than at the center. That is to say, when the permanent magnet rotates relative to the pole piece and the eddy current retarder is switched from the non-braking state to the braking state, the front end side of the inner circumferential surface of the pole piece in the rotation direction, on which the magnetic fluxes tend to concentrate, is kept away from the permanent magnet. This reduces the resistive force acting on the permanent magnet rotating relative to the pole piece. Also, since the first region is formed so that it is separated from the permanent magnet at an increasing distance toward the front end side of the inner circumferential surface of the pole piece, it is possible to gently connect the first region to one side surface of the pole piece. Accordingly, the concentration of magnetic fluxes at the boundary between the first region and the side surface of the pole piece can be mitigated. Therefore, the switching force to switch from the non-braking state to the braking state can be reduced.

While the eddy current retarder according to the first configuration is being switched from the non-braking state to the braking state, each permanent magnet passes by the rear end of the inner circumferential surface of the corresponding pole piece in the direction of rotation of the permanent magnet relative to the pole piece, and faces the inner circumferential surface. The inner circumferential surface of the pole piece includes the second region that is separated from the permanent magnet at an increasing distance toward the rear end of the pole piece in the rotation direction. With this second region, the magnetic flux flow entering the pole piece from the rear end of the inner circumferential surface and the vicinity thereof is inclined from the radial direction toward the rotation direction, and the attractive force acting on the permanent magnet from the pole piece is also inclined. In other words, the attractive force from the pole piece acts to promote the rotation of the permanent magnet. This further reduces the switching force to switch from the non-braking state to the braking state.

In the eddy current retarder according to the first configuration, the gap between each permanent magnet and the inner circumferential surface of the corresponding pole piece in the braking state is small at the center of this inner circumferential surface and is large on both end sides of the inner circumferential surface, in the rotation direction (circumferential direction) of rotation of the permanent magnets relative to the pole pieces. Therefore, in the braking state, the magnetic resistance between the permanent magnet and the inner circumferential surface of the pole piece is non-uniform in the circumferential direction. The magnetic fluxes from the permanent magnet in the braking state are not likely to spread to both end sides of the inner circumferential surface of the pole piece but are likely to concentrate on the center side. Therefore, the braking torque of the eddy current retarder is less likely to be reduced, although the magnetic resistance is larger than in the case where the gap between the permanent magnet and the inner circumferential surface of the pole piece is constant.

Therefore, according to the eddy current retarder of the embodiment, it is possible to reduce the switching force to switch from the non-braking state to the braking state while securing the braking torque.

In the eddy current retarder according to the first configuration, the first region may have a shape that smoothly expands the gap from the center side of the inner circumferential surface toward the front end (second configuration).

According to the second configuration, the first region of the inner circumferential surface of each pole piece has a shape that smoothly expands the gap between the inner circumferential surface and the corresponding permanent magnet in the braking state toward the front end side in the rotation direction. In other words, the first region is formed so as not to generate any edge on the inner circumferential surface of the pole piece. Therefore, the magnetic fluxes are not likely to concentrate at the first region and the vicinity thereof, making it possible to suppress an increase in magnetic flux density. Therefore, the switching force to switch from the non-braking state to the braking state can be further reduced.

In the eddy current retarder according to the first or second configuration, the second region may have a shape that smoothly expands the gap from the center side of the inner circumferential surface toward the rear end (third configuration).

According to the third configuration, the second region of the inner circumferential surface of each pole piece has a shape that smoothly expands the gap between the inner circumferential surface and the corresponding permanent magnet toward the rear end side in the rotation direction. In other words, the second region is formed so as not to generate any edge on the inner circumferential surface of the pole piece. Therefore, the magnetic fluxes are not likely to concentrate at the second region and the vicinity thereof. This further reduces the switching force to switch from the braking state to the non-braking state.

In the eddy current retarder according to any one of the first to third configurations, the inner circumferential surface may have a symmetrical shape with respect to the center thereof when viewed in a cross-section taken along the rotation direction (fourth configuration).

In the fourth configuration, the shape of the inner circumferential surface of each pole piece is symmetrical with respect to the center in the rotation direction when viewed in a cross-section taken along the direction of relative rotation of the permanent magnet relative to the pole piece (circumferential direction). In this case, for example, even if a slight deviation in the positional relationship in the circumferential direction between each permanent magnet and the corresponding pole piece occurs during the manufacturing (assembly) process of the eddy current retarder, a variation in performance is less likely to occur than in the case where the inner circumferential surface of each pole piece is asymmetric, making it possible to cause the eddy current retarder to generate a stable braking torque.

Hereinafter, an embodiment of the present disclosure will be described with reference to the drawings. In the drawings, the same or equivalent configuration is indicated with the same reference sign, and the redundant description is not repeated.

### [Configuration of Eddy Current Retarder]

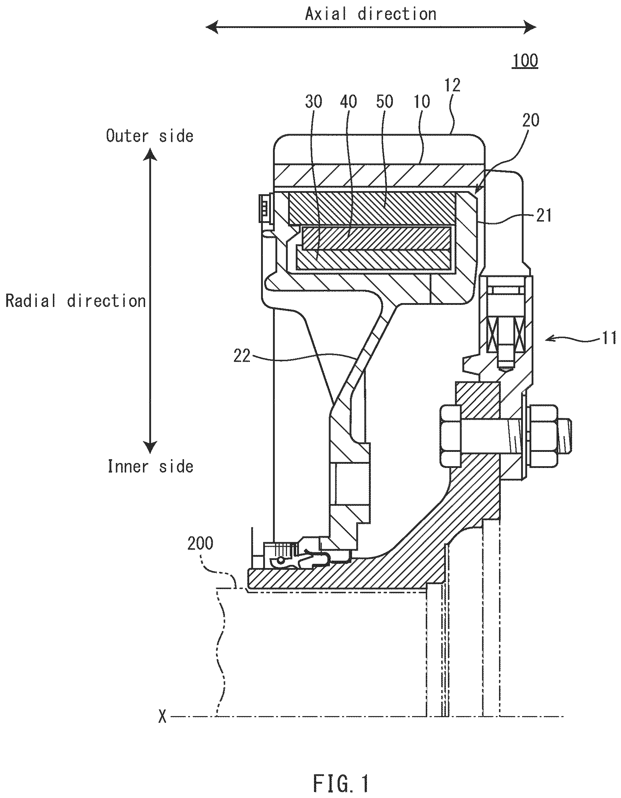

FIG. 1 is a longitudinal cross-sectional view showing a schematic configuration of an eddy current retarder 100 according to the present embodiment. The retarder 100 is used, for example, as an auxiliary brake for vehicles such as trucks and buses. The longitudinal cross-section refers to a cross-section taken along a plan that includes an axis X of a rotary shaft 200 of a vehicle in which the retarder 100 is used. The rotary shaft 200 is a propeller shaft or a drive shaft, for example. Hereinafter, the direction in which the axis X extends is referred to as an axial direction.

Referring to FIG. 1, the retarder 100 includes a braking member 10, a stator 20, a magnet holding member 30, a plurality of permanent magnets 40, and a plurality of pole pieces 50.

The braking member 10 has a cylindrical shape. The axis of the braking member 10 substantially matches the axis X of the rotary shaft 200. The braking member 10 is fixed to the rotary shaft 200. More specifically, the braking member 10 is fixed to the rotary shaft 200 via a support member 11. Therefore, the braking member 10 rotates about the axis X together with the rotary shaft 200. Hereinafter, the circumferential direction and radial direction of the braking member 10 are simply referred to as the circumferential direction and radial direction, respectively.

The braking member 10 is made of a conductive material. The braking member 10 may be made of a ferromagnetic material such as carbon steel or cast iron, for example. The inner circumferential surface of the braking member 10 may be coated with a highly conductive metal plating layer such as a copper plating layer, for example. A plurality of heat dissipation fins 12 are provided on the outer circumferential surface of the braking member 10.

The stator 20 is disposed on the inner side of the braking member 10 in the radial direction. The stator 20 is fixed to a non-rotating part (not shown) of the vehicle so as not to rotate together with the rotary shaft 200. The non-rotating part is, for example, a transmission cover.

The stator 20 includes a stator case 21 and a stator holding member 22. The stator case 21 has a substantially annular shape, for example. The stator case 21 is attached to the non-rotating part of the vehicle via the stator holding member 22. The stator case 21 houses the magnet holding member 30, the permanent magnets 40, and the pole pieces 50.

The magnet holding member 30 typically has a cylindrical shape. The magnet holding member 30 is arranged substantially coaxially with the braking member 10. The magnet holding member 30 is disposed on the inner side of the braking member 10 in the radial direction. The magnet holding member 30 is made of a ferromagnetic material such as carbon steel or cast iron, for example.

The magnet holding member 30 does not rotate together with the rotary shaft 200. The magnet holding member 30 is disposed inside the stator case 21. The magnet holding member 30 is provided so as to be movable with respect to the stator case 21 in the circumferential direction. The magnet holding member 30 is attached to the stator case 21 via, for example, a ring-shaped slide plate (not shown). The magnet holding member 30 is connected to an actuator such as an air cylinder or an electric cylinder by a link mechanism (not shown). For example, as a result of this actuator extending or retracting, the magnet holding member 30 rotates around the rotary shaft 200 and moves with respect to the stator case 21 in the circumferential direction. By rotating the magnet holding member 30 around the rotary shaft 200, the retarder 100 is switched between a braking state and a non-braking state.

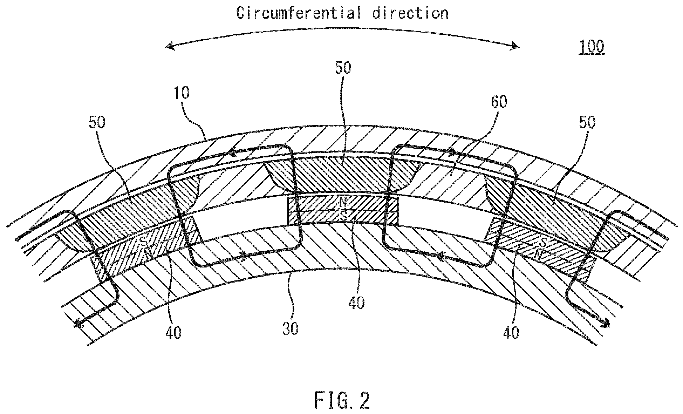

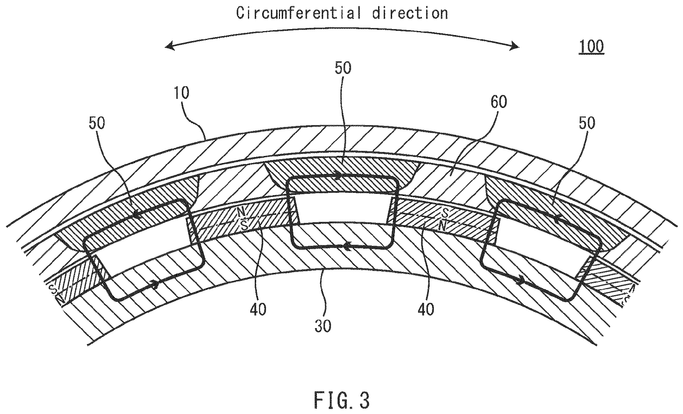

FIGS. 2 and 3 are cross-sectional views (transverse cross-sectional views) of the retarder 100 taken along a plane perpendicular to the axis X of the rotary shaft 200, showing a portion of the retarder 100. FIG. 2 shows the retarder 100 in the braking state. FIG. 3 shows the retarder 100 in the non-braking state. In FIGS. 2 and 3, part of the configuration of the retarder 100 is omitted for convenience of explanation.

Referring to FIG. 2, the plurality of permanent magnets 40 are disposed on the inner side of the braking member 10 in the radial direction. The permanent magnets 40 are lined up in the circumferential direction of the braking member 10. The permanent magnets 40 are arranged over the entire circumference of the braking member 10 at substantially regular intervals. The permanent magnets 40 are arranged on the outer circumferential surface of the magnet holding member 30 and are held by the magnet holding member 30.

Each of the permanent magnets 40 has a pair of magnetic poles (N and S poles). The magnetic poles of each permanent magnet 40 are arranged in the radial direction. The magnetic poles of each permanent magnet 40 are reversed with respect to the magnetic poles of the other permanent magnets 40 adjacent thereto in the circumferential direction. Each permanent magnet 40 has an N or S pole on the inner side in the radial direction and the opposite S or N pole on the outer side in the radial direction.

The plurality of pole pieces 50 are disposed between the braking member 10 and the permanent magnets 40 in the radial direction. The pole pieces 50 are lined up in the circumferential direction of the braking member 10. The pole pieces 50 are arranged over the entire circumference of the braking member 10 at substantially regular intervals. The number of the pole pieces 50 is equal to the number of the permanent magnets 40. Typically, the length (width) of the pole pieces 50 in the circumferential direction is greater than or equal to the length (width) of the permanent magnets 40 in the circumferential direction. The width of the pole pieces 50 is preferably greater than the width of the permanent magnets 40.

Each of the pole pieces 50 is made of a ferromagnetic material. The pole piece 50 is supported by a support 60. The support 60 is made of a non-magnetic material. The support 60 is interposed between every two pole pieces 50 adjacent to each other in the circumferential direction.

Continuously referring to FIG. 2, when the retarder 100 is in the braking state, the permanent magnets 40 and the pole pieces 50 are arranged so that one permanent magnet 40 corresponds to one pole piece 50. Therefore, magnetic fluxes (bold arrows) from each permanent magnet 40 pass through the pole piece 50 and reaches the braking member 10, which rotates together with the rotary shaft 200 (FIG. 1). With this, eddy currents are generated on the inner circumferential surface of the braking member 10. The interaction between the eddy currents and the magnetic field generated by the permanent magnets 40 generates a braking torque on the braking member 10.

Referring to FIG. 3, when the retarder 100 is in the non-braking state, the permanent magnets 40 and the pole pieces 50 are arranged so that one permanent magnet 40 bridges two pole pieces 50 adjacent to each other in the circumferential direction. In other words, each permanent magnet 40 radially faces one pole piece 50 on one side in the circumferential direction and radially faces another pole piece 50 on the other side in the circumferential direction. In the non-braking state, a magnetic circuit is formed between the magnet holding member 30, the permanent magnets 40, and the pole pieces 50, and magnetic fluxes (bold arrows) from the permanent magnet 40 do not reach the braking member 10. Therefore, no braking torque on the braking member 10 is generated.

The plurality of permanent magnets 40 are configured to rotate relative to the plurality of pole pieces 50 along the circumferential direction to switch the retarder 100 between the braking and non-braking states. When switching between the braking and non-braking states, the permanent magnets 40 may be moved with the pole pieces 50 fixed, or the pole pieces 50 may be moved with the permanent magnets 40 fixed. In the present embodiment, the permanent magnets 40 are moved with respect to the pole pieces 50 as the magnet holding member 30 holding the permanent magnets 40 rotates about its central axis. When switching from the braking state to the non-braking state, the permanent magnets 40 rotate with respect to the pole pieces 50 to one side in the circumferential direction. When switching from the non-braking state to the braking state, the permanent magnets 40 rotate with respect to the pole pieces 50 to the other side in the circumferential direction.

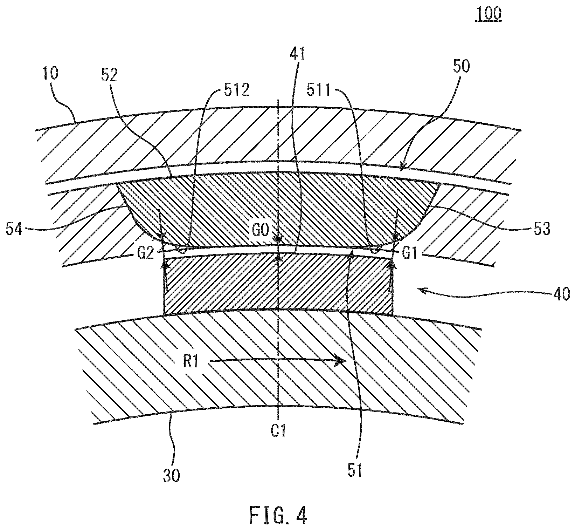

FIG. 4 is an enlarged view of a portion of FIG. 2. Referring to FIG. 4, each pole piece 50 includes an inner circumferential surface 51, an outer circumferential surface 52, and side surfaces 53 and 54. The inner circumferential surface 51 is the surface of the pole piece 50 that is located on the permanent magnet 40 side. The inner circumferential surface 51 faces one of the permanent magnets 40 in the braking state with a gap in the radial direction. The outer circumferential surface 52 is located on the outer side of the inner circumferential surface 51 in the radial direction. The outer circumferential surface 52 is a surface that faces the inner circumferential surface of the braking member 10 in the radial direction. The entire outer circumferential surface 52 extends in the circumferential direction when viewed in a transverse cross-sectional view of the retarder 100, for example. The side surfaces 53 and 54 connect the inner circumferential surface 51 and the outer circumferential surface 52. When the direction of rotation of the permanent magnets 40 relative to the pole pieces 50 when switching the retarder 100 from the non-braking state to the braking state is defined as a rotation direction R1, the side surface 53 is located forward of the side surface 54 in the rotation direction R1. The rotation direction R1 of the permanent magnets 40 may be the same as the rotation direction of the braking member 10 or may be opposite to the rotation direction of the braking member 10.

The inner circumferential surface 51 includes a first region 511 and a second region 512. In the braking state, at least portions of the first and second regions 511 and 512 face the outer circumferential surface 41 of the permanent magnet 40 in the radial direction.

The first region 511 is located forward of the center C1 of the inner circumferential surface 51 in the rotation direction R1. The first region 511 is separated in the radial direction from the permanent magnet 40 at an increasing distance toward the front end side of the inner circumferential surface 51 in the rotation direction R1 in a manner such that the radial gap between the inner circumferential surface 51 and the permanent magnet 40 is larger on the front end side than at the center C1. In other words, in a range of the first region 511 that faces the permanent magnet 40 in the radial direction, the radial gap between the first region 511 and the permanent magnet 40 gradually becomes wider toward the front side in the rotation direction R1. The first region 511 is directly connected to the side surface 53.

Preferably, the first region 511 has a shape that smoothly expands the radial gap between the inner circumferential surface 51 of the pole piece 50 and the permanent magnet 40 from the center C1 side to the front end side in the rotation direction R1. In other words, it is preferable that, when viewed in a transverse cross-sectional view of the retarder 100, no visible edge be formed at the first region 511, and the boundary between the first region 511 and a region of the inner circumferential surface 51 on the center C1 side. The first region 511 has a curved shape projecting toward the permanent magnet 40 as viewed in a transverse cross-sectional view of the retarder 100, for example. The curved shape projecting toward the permanent magnet 40 refers to a curve whose center of curvature is located on the outer side in the radial direction with respect to the inner circumferential surface 51. The first region 511 may extend with a single radius of curvature or may have a varying radius of curvature. The first region 511 may have a curved shape as a whole in a transverse cross-sectional view of the retarder 100 or may partially include a linear portion. If the first region 511 partially includes a linear portion, the linear portion is preferably a tangent to an end point of the curved portion that is continuous with that linear portion, so that no edge is formed at the boundary between the linear portion and the curved portion.

In the example of FIG. 4, the first region 511 is smoothly connected to the side surface 53 so that no edge is formed even at the boundary between the first region 511 and the side surface 53. In a transverse cross-sectional view of the retarder 100, the side surface 53 is, for example, a tangent to an end point of the first region 511. The side surface 53 is typically linear as a whole in a transverse cross-sectional view of the retarder 100. In a transverse cross-sectional view of the retarder 100, the side surface 53 may be substantially parallel to the radial direction, or may be inclined with respect to the radial direction so that its end continuous with the outer circumferential surface 52 is located on the outer side in the circumferential direction, relative to its end continuous with the first region 511. The first region 511 as a whole is located on the inner side of the side surface 53 in the circumferential direction.

The second region 512 is located on the opposite side of the first region 511 with respect to the center C1 of the inner circumferential surface 51. In other words, the second region 512 is located rearward of the center C1 in the rotation direction R1. The second region 512 is separated in the radial direction from the permanent magnet 40 at an increasing distance toward the rear end side of the inner circumferential surface 51 in the rotation direction R1 in a manner such that the gap is larger on the rear end side than at the center C1. In other words, in a range of the second region 512 that faces the permanent magnet 40 in the radial direction, the radial gap between the second region 512 and the permanent magnet 40 gradually becomes wider toward the rear side in the rotation direction R1. The second region 512 is directly connected to the side surface 54.

Preferably, the second region 512 has a shape that smoothly expands the radial gap between the inner circumferential surface 51 of the pole piece 50 and the permanent magnet 40 from the center C1 side to the rear end side in the rotation direction R1. In other words, it is preferable that, when viewed in a transverse cross-sectional view of the retarder 100, no visible edge be formed at the second region 512, and the boundary between the second region 512 and the region of the inner circumferential surface 51 on the center C1 side. The second region 512 has a curved shape projecting toward the permanent magnet 40 as viewed in a transverse cross-sectional view of the retarder 100, for example. The second region 512 may extend with a single radius of curvature or may have a varying radius of curvature. The second region 512 may have a curved shape as a whole in a transverse cross-sectional view of the retarder 100 or may partially include a linear portion. If the second region 512 partially includes a linear portion, the linear portion is preferably a tangent to an end point of the curved portion that is continuous with that linear portion, so that no edge is formed at the boundary between the linear portion and the curved portion.

In the example of FIG. 4, the second region 512 is smoothly connected to the side surface 54 so that no edge is formed even at the boundary between the second region 512 and the side surface 54. In a transverse cross-sectional view of the retarder 100, the side surface 54 is, for example, a tangent to an end point of the second region 512. The side surface 54 is linear as a whole in a transverse cross-sectional view of the retarder 100. In a transverse cross-sectional view of the retarder 100, the side surface 54 may be substantially parallel to the radial direction, or may be inclined with respect to the radial direction so that its end continuous with the outer circumferential surface 52 is located on the outer side in the circumferential direction, relative to its end continuous with the second region 512. The second region 512 as a whole is located on the inner side of the side surface 54 in the circumferential direction.

In the braking state, when the size of the radial gap between the inner circumferential surface 51 of the pole piece 50 and the outer circumferential surface 41 of the permanent magnet 40 at the center C1 is defined as G0, and the size of the radial gap between the first region 511 and the outer circumferential surface 41 of the permanent magnet 40 is defined as G1 (details of which will be described later), G1/G0 is 1.4 or more, for example. G1/G0 may be 8.5 or less. Similarly, when the size of the radial gap between the second region 512 and the outer circumferential surface 41 of the permanent magnet 40 is defined as G2 (details of which will be described later), G2/G0 is 1.4 or more, for example. G2/G0 may be 8.5 or less.

In the present description, G1 is the size of the radial gap in a range where the first region 511 and the outer circumferential surface 41 of the permanent magnet 40 face each other in the braking state, specifically, the size of the gap in this range at the most forward end position in the rotation direction R1. Similarly, G2 is the size of the radial gap in a range where the second region 512 and the outer circumferential surface 41 of the permanent magnet 40 face each other in the braking state, specifically, the size of the gap in this range at the most rearward end position in the rotation direction R1.

On the inner circumferential surface 51 of each pole piece 50, the first region 511 and the second region 512 may be adjacent to each other, or may be connected to each other via another region. For example, the inner circumferential surface 51 may include, between the first region 511 and the second region 512, a region where the radial gap to the permanent magnet 40 is constant. This region may have a curved shape projecting to the opposite side to the permanent magnet 40 in a transverse cross-sectional view of the retarder 100, in other words, a curved shape whose center of curvature is located on the inner side in the radial direction with respect to the inner circumferential surface 51.

In the example of the present embodiment, the inner circumferential surface 51 of the pole piece 50 has a shape that is substantially symmetrical with respect to the center C1 when viewed in a cross-section (transverse cross-section) taken along the rotation direction R1. However, the inner circumferential surface 51 of the pole piece 50 may be asymmetrical with respect to the center C1 when viewed in the transverse cross-sectional view. In the transverse cross-sectional view of the pole piece 50, the first region 511 on the front side of the pole piece 50 in the rotation direction R1 may be symmetrical or asymmetrical with the second region 512 located on the rear side in the rotation direction R1, with respect to the center C1.

In the retarder 100, it is preferred that all the pole pieces 50 have, on their inner circumferential surface 51, a first region 511 and a second region 512. However, all the pole pieces 50 do not need to have the same shape.

### [Effects]

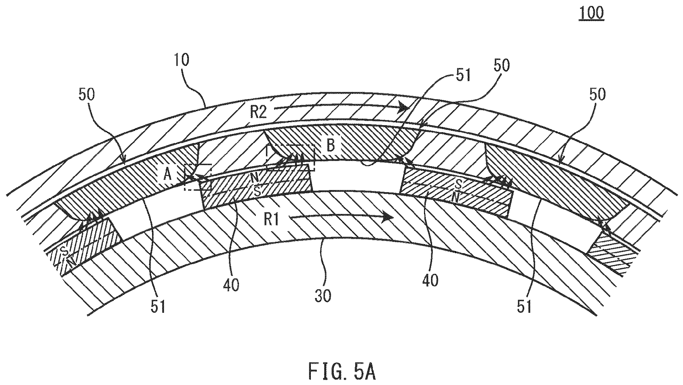

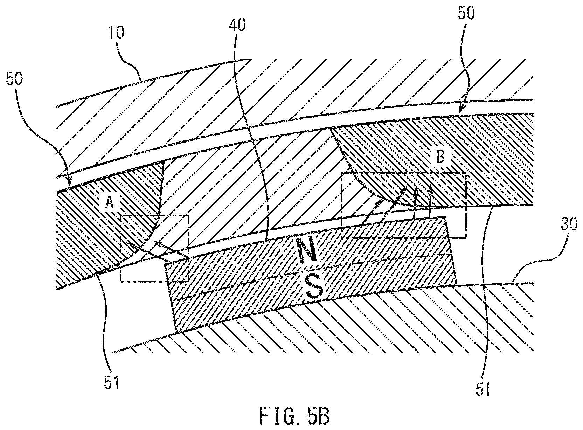

When the eddy current retarder 100 according to the present embodiment is switched from the non-braking state to the braking state, the plurality of permanent magnets 40 rotate relative to the plurality of pole pieces 50 in the rotation direction R1. The inner circumferential surface 51 of each pole piece 50 includes the first region 511 located forward of the center C1 in the rotation direction R1. This first region 511 can enlarge the gap to the corresponding permanent magnet 40 at and near the front end of the inner circumferential surface 51 of the pole piece 50 that faces the permanent magnet 40 until a later phase of the switching from the non-braking state to the braking state. In other words, at the time of switching from the non-braking state to the braking state, the front end of the inner circumferential surface 51 of the pole piece 50, at which the magnetic fluxes tend to concentrate especially, and the vicinity thereof are kept away from the permanent magnet. With this, as shown in FIGS. 5A and 5B, the attractive force acting on the permanent magnet 40 from the front end side of the inner circumferential surface 51 of the pole piece 50 decreases (see region A), and the resistive force when the permanent magnet 40 rotates in the rotation direction R1 is reduced. Also, since the first region 511 is formed so that it is separated from the permanent magnet 40 at an increasing distance toward the front end side of the inner circumferential surface 51 of the pole piece 50, the first region 511 can be gently connected to the side surface 53 of the pole piece 50. Therefore, it is possible to mitigate the concentration of the magnetic fluxes at the boundary between the first region 511 and the side surface 53 of the pole piece 50. Therefore, the switching force to switch from the non-braking state to the braking state can be reduced.

In the eddy current retarder 100 according to the present embodiment, the inner circumferential surface 51 of each pole piece 50 includes the second region 512 located rearward of the center C1 in the rotation direction R1. With this second region 512, the magnetic flux flow entering the pole piece 50 from the rear end of the inner circumferential surface 51 in the rotation direction R1 and the vicinity thereof is inclined from the radial direction toward the rotation direction R1. Accordingly, as shown in FIGS. 5A and 5B, the attractive force acting on the permanent magnet 40 from the rear end of the inner circumferential surface 51 of the pole piece 50 and the vicinity thereof is also inclined from the radial direction toward the rotation direction R1 (see area B). This can promote rotation of the permanent magnet 40 in the rotation direction R1, further reducing the switching force to switch from the non-braking state to the braking state.

FIGS. 5A and 5B show an example where the rotation direction R1 of the permanent magnets 40 with respect to the pole pieces 50 matches the rotation direction R2 of the braking member 10, when switching from the non-braking state to the braking state. If the rotation direction R1 is inverted with respect to the rotation direction R2 of the braking member 10, the magnetic flux density distributions (attractive force) in the regions A and B indicated by the two dotted lines in FIGS. 5A and 5B are simply reversed at each permanent magnet 40. Therefore, the switching force to switch from the non-braking state to the braking state can be reduced regardless of whether the rotation direction R1 of the permanent magnets 40 matches the rotation direction R2 of the braking member 10.

In the eddy current retarder 100 according to the present embodiment, the gap between the outer circumferential surface 41 of each permanent magnet 40 and the inner circumferential surface 51 of the corresponding pole piece 50 in the braking state is small at the center C1 of this inner circumferential surface 51 and is large on both end sides thereof in the circumferential direction. Therefore, in the braking state, the magnetic resistance between the permanent magnet 40 and the pole piece 50 is non-uniform in the circumferential direction, and the magnetic fluxes from the permanent magnet 40 are not likely to spread to both end sides of the inner circumferential surface 51 of the pole piece 50, but are likely to concentrate on the center C1 side. Therefore, due to the gap between the outer circumferential surface 41 of the permanent magnet 40 and the inner circumferential surface 51 of the pole piece 50 in the braking state being enlarged at both end sides, the braking torque of the retarder 100 is not likely to be reduced although the magnetic resistance is larger than that of conventional eddy current retarders in which the gap is substantially constant throughout.

In the eddy current retarder 100 according to the present embodiment, the first region 511 of the inner circumferential surface 51 of each pole piece 50 has a shape that smoothly expands the gap between the inner circumferential surface 51 and the corresponding permanent magnet 40 toward the front end side in the rotation direction R1. In other words, there are substantially no edge in the first region 511 and the vicinity thereof. This mitigates the concentration of the magnetic fluxes in the first region 511 and the vicinity thereof, making it possible to suppress an increase in magnetic flux density. Therefore, the switching force to switch from the non-braking state to the braking state can be further reduced.

In the eddy current retarder 100 according to the present embodiment, the second region 512 of the inner circumferential surface 51 of each pole piece 50 has a shape that smoothly expands the gap between the inner circumferential surface 51 and the corresponding permanent magnet 40 toward the rear end side in the rotation direction R1. In other words, there is substantially no edge in the second region 512 and the vicinity thereof. This easily mitigates the concentration of the magnetic fluxes in the second region 512 and the vicinity thereof. In this case, the switching force to switch from the braking state to the non-braking state can be reduced.

In the present embodiment, both the first region 511 and the second region 512 of the inner circumferential surface 51 of each pole piece 50 have a shape that smoothly expands the gap between the inner circumferential surface 51 and the corresponding permanent magnet 40 toward the respective ends of the inner circumferential surface 51, namely, a curved shape (substantially arc-shape) as a whole in a transverse cross-sectional view of the retarder 100. However, either or both the first region 511 and the second region 512 need not have a shape (arc shape) that smoothly expands the gap between the inner circumferential surface 51 and the permanent magnet 40 toward the corresponding end of the inner circumferential surface 51. For example, at least one of the first region 511 and the second region 512 may have a linear shape as a whole.

The embodiment according to the present disclosure has been described, but the present disclosure is not limited to the above embodiment, and various changes are possible without departing from the gist of the present disclosure.

### EXAMPLES

The following will describe the present disclosure in more detail with reference to examples. However, the present disclosure is not limited to the following examples.

### [First Example]

To review the effects of the present disclosure, magnetic field analysis was conducted on eddy current retarders of different shapes using general-purpose electromagnetic field analysis software (JMAG, manufactured by JSOL Corporation), and braking torques and switching forces were evaluated.

In this analysis, the eddy current retarder according to Example 1 has the same configuration as the retarder 100 that has been described with reference to the embodiment above. That is to say, in the retarder according to Example 1, as shown in FIG. 4, the inner circumferential surface 51 of each pole piece 50 includes the first region 511 and the second region 512 that enlarge the radial gap to the corresponding permanent magnet 40 toward both end sides in the circumferential direction. In the retarder according to Example 1, the number of the permanent magnets 40 was 24. Also, a copper plating layer was added to the inner circumferential surface of the braking member 10.

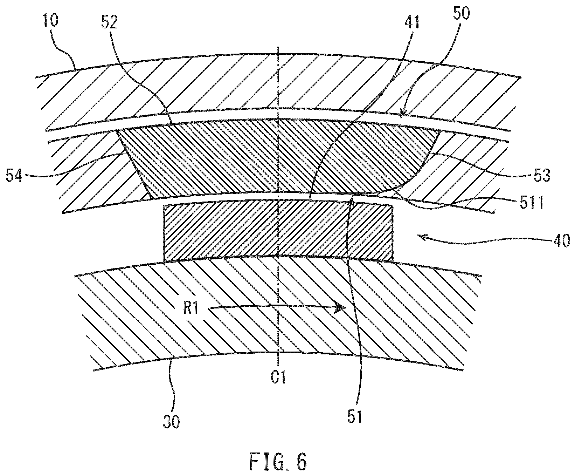

FIG. 6 is a schematic diagram showing a transverse cross-section of an eddy current retarder according to a comparative example. The retarder according to the comparative example differs from the retarder according to Example 1 only in the shape of the pole pieces 50. In the comparative example, the inner circumferential surface 51 of each pole piece 50 includes the first region 511 but does not include the second region 512. In other words, in the comparative example, the gap between the inner circumferential surface 51 of each pole piece 50 and the corresponding permanent magnet 40 is enlarged on the front side in the rotation direction R1 of the permanent magnet 40 when switching from the non-braking state to the braking state, but is constant on the rear side in the rotation direction R1.

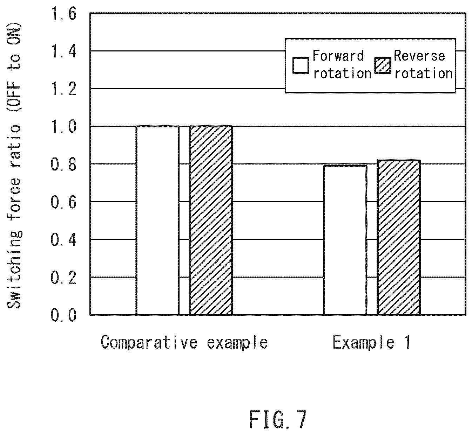

In this analysis, the braking torque and the switching force were evaluated for both a case where the rotation direction of the braking member 10 matches the rotation direction R1 of the permanent magnets 40 when switching from the non-braking state (OFF) to the braking state (ON) (forward rotation), and a case where the directions are opposite to each other (reverse rotation). FIGS. 7 to 9 show the braking torques and the switching forces obtained by this analysis.

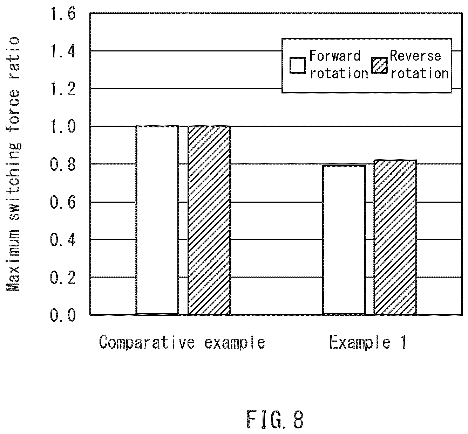

FIG. 7 is a graph showing the switching forces to switch from OFF to ON when the rotation speed of the braking member 10 is 3600 rpm, for the comparative example and Example 1. FIG. 7 shows the ratios with respect to the switching forces of the comparative example. FIG. 8 is a graph showing the maximum switching forces for the comparative example and Example 1. FIG. 8 shows the ratios with respect to the maximum switching forces of the comparative example, with the larger of the switching force to switch from OFF to ON when the rotation speed of the braking member 10 is 3600 rpm and the switching force to switch from ON to OFF when the rotation speed of the braking member 10 is 0 rpm (stopped state) serving as the maximum switching force. As shown in FIG. 7, in Example 1, where the gap between the inner circumferential surface 51 of each pole piece 50 and the corresponding permanent magnet 40 is enlarged on both sides in the rotation direction R1, the switching force to switch from OFF to ON was significantly reduced, compared to the comparative example, where the gap between the inner circumferential surface 51 of each pole piece 50 and the corresponding permanent magnet 40 is enlarged only on the front side in the rotation direction R1. As shown in FIG. 8, the maximum switching force used to select the actuator that switches ON/OFF was also lower in Example 1 than in the comparative example. Therefore, it was found that the switching force when switching between the braking state and the non-braking state could be reduced, by providing both the first region 511 and the second region 512 on the inner circumferential surface 51 so that the gap between the inner circumferential surface 51 of each pole piece 50 and the corresponding permanent magnet 40 is enlarged on both sides in the rotation direction R1.

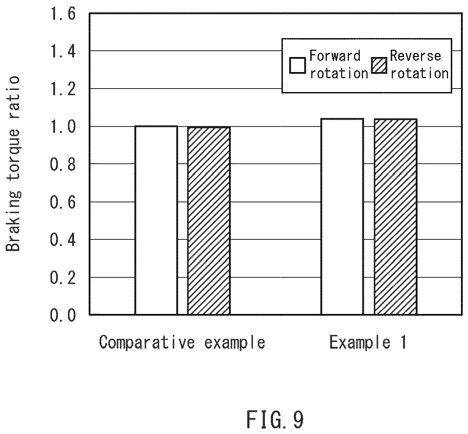

FIG. 9 is a graph showing the braking torques when the rotation speed of the braking member 10 is 3600 rpm. FIG. 9 shows the ratios with respect to the braking torques of the comparative example. As shown in FIG. 9, it was also found that Example 1 could maintain the braking torque that is equal to or greater than that of the comparative example.

### [Second Example]

To review the influence of the difference in shape of the first region 511 and the second region 512 included in the inner circumferential surface 51 of each pole piece 50, the same magnetic field analysis as in the first example was conducted on, in addition to the eddy current retarder according to Example 1, an eddy current retarder (Example 2) including the first and second regions 511 and 512 whose shapes are different from those in Example 1, and the braking torque and the switching force were evaluated.

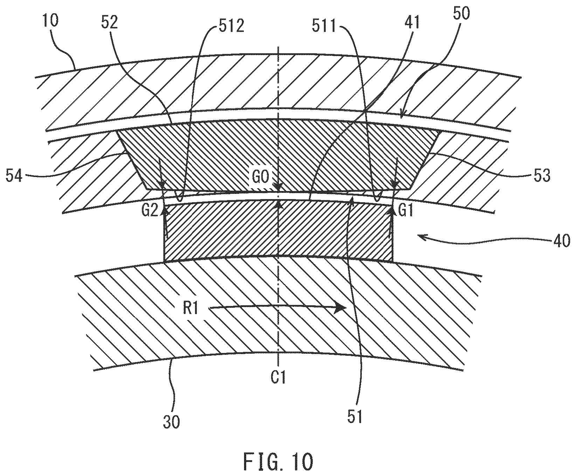

FIG. 10 is a schematic diagram showing a transverse cross-section of the eddy current retarder according to Example 2. In the retarder according to Example 2, as in Example 1, the inner circumferential surface 51 of each pole piece 50 includes the first region 511 and the second region 512 that enlarges the radial gap to the corresponding permanent magnet 40 toward both end sides in the circumferential direction. In both Example 1 and Example 2, the first region 511 and the second region 512 are substantially arc-shaped as viewed in a transverse cross-sectional view of the corresponding retarder. However, the radii of curvature of the first region 511 and the second region 512 are larger in Example 2 than in Example 1. In Example 1, the inner circumferential surface 51 of each pole piece 50 includes, in addition to the first region 511 and the second region 512, a third region located between the first region 511 and the second region 512. In the third region, the radial gap to the permanent magnet 40 is constant. On the other hand, in Example 2, on the inner circumferential surface 51 of each pole piece 50, the first region 511 and the second region 512 are adjacent to each other and there is no third region where the radial gap to the permanent magnet 40 is constant. On the assumption that the thickness of each pole piece 50 at the center C1 is 1.0, the radii of curvature of the first region 511 and the second region 512 are, for example, 0.4 or greater. In Example 2, on the assumption that the thickness of each pole piece 50 at the center C1 is 1.0, the radii of curvature of the first region 511 and the second region 512 were 160.0. On the other hand, in Example 1, on the assumption that the thickness of each pole piece 50 at the center C1 was 1.0, the radii of curvature of the first and second regions 511 and 512 were 0.8. From the viewpoint of further reducing the switching force while improving the braking torque, it is preferable that on the assumption that the thickness of each pole piece 50 at the center C1 is 1.0, the radii of curvature of the first region 511 and the second region 512 be between 0.5 and 2.0 inclusive, as in Example 1.

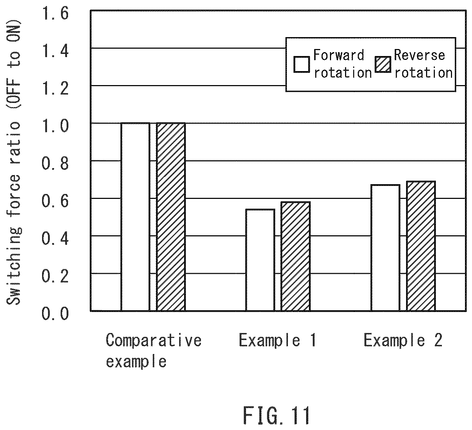

FIGS. 11 to 13 show the switching forces, the maximum switching forces, and the braking torques when switching from OFF to ON at a rotation speed of 3600 rpm, for Example 1 and Example 2. FIGS. 11 to 13 also show, for reference, the switching forces, the maximum switching forces, and the braking torques when switching from OFF to ON at a rotation speed of 3600 rpm, for a conventional eddy current retarder (conventional example) in which the gap between the inner circumferential surface 51 of each pole piece 50 and the corresponding permanent magnet 40 is substantially constant throughout in the braking state. FIGS. 11 to 13 show the ratios of the switching forces, the maximum switching forces, and the braking torques when switching from OFF to ON at a rotation speed of 3600 rpm to those in the conventional example.

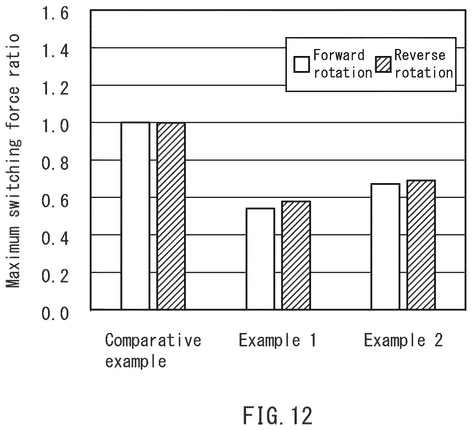

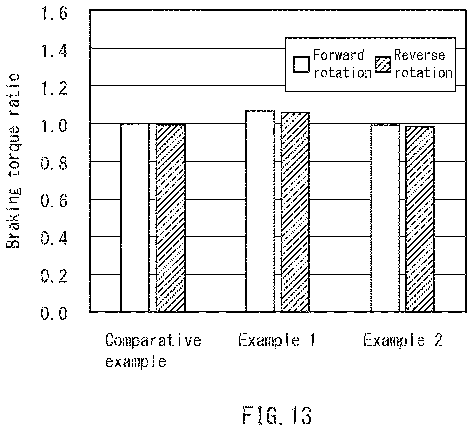

Referring to FIGS. 11 and 12, even in Example 2, where the radii of curvature of the first region 511 and the second region 512 are relatively large, the effects of reduction in switching force and maximum switching force to switch from OFF to ON were confirmed as in Example 1. In both Example 1 and Example 2, the switching forces and maximum switching forces to switch from OFF to ON were significantly reduced compared to the conventional example. Referring to FIG. 13, it was also found that Example 1 and Example 2 could maintain the braking torque that was equivalent to or exceeding that in the conventional example.

Therefore, it can be said that it is possible to reduce the switching force when switching between the braking state and the non-braking state while ensuring the braking torque, regardless of the shapes (radii of curvature) of the first and second regions 511 and 512, by providing both the first region 511 and the second region 512 on the inner circumferential surface 51 so that the gap between the inner circumferential surface 51 of each pole piece 50 and the corresponding permanent magnet 40 is enlarged on both sides in the rotation direction R1 of the permanent magnet 40.

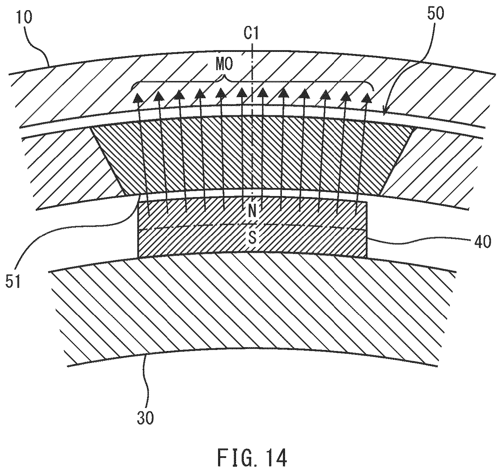

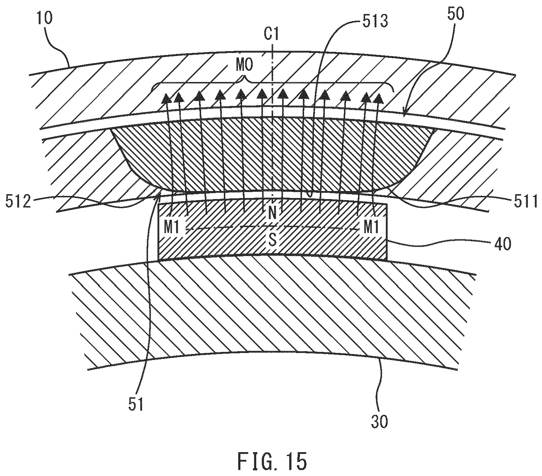

As shown in FIG. 13, it was also found that the braking torques were improved in Example 1 than those in the conventional example. The braking torque of eddy current retarders increases as the total magnetic flux flowing into the braking member 10 and the magnetic flux density at the inflow portion of the braking member 10 are higher. Hereinafter, the total magnetic flux flowing into the braking member 10 and the magnetic flux density at the inflow portion of the braking member 10 in the eddy current retarders of the conventional example and Example 1 will be described with reference to FIGS. 14 and 15. FIGS. 14 and 15 are schematic diagrams showing the magnetic fluxes flowing from the permanent magnet 40 to the pole piece 50 and the braking member 10 when the eddy current retarders according to the conventional example and Example 1 are in the braking state. FIGS. 14 and 15 each show the magnetic flux flow when the braking member 10 is stopped, i.e., when the effect of the diamagnetic field generated by eddy currents flowing through the braking member 10 is ignored.

As shown in FIG. 14, in the conventional example, where the gap between the permanent magnet 40 and the inner circumferential surface 51 of the pole piece 50 is substantially constant throughout, all magnetic fluxes M0 injected from the permanent magnet 40 flow into the opposing pole piece 50. The magnetic fluxes M0 spread over the width of the pole piece 50, and then flow into the braking member 10.

On the other hand, as shown in FIG. 15, in Example 1, all the magnetic fluxes M0 injected from the permanent magnet 40 flow into the opposing pole piece 50. Note however that, in Example 1, at both ends of the permanent magnet 40, the gap to the inner circumferential surface 51 of the pole piece 50 is enlarged, so magnetic fluxes M1 at the respective ends of the permanent magnet 40 flow into the pole piece 50 while sloping toward the center C1 so as to reach the pole piece 50 by the shortest path. As a result, in Example 1, the magnetic fluxes M0 flow into the braking member 10 with a slight convergence in a central region in the circumferential direction, compared to the conventional example. More specifically, in Example 1, since the inner circumferential surface 51 of the pole piece 50 includes, between the first region 511 and the second region 512, the third region 513, where the radial gap to the permanent magnet 40 is constant, the magnetic fluxes M0 from the permanent magnet 40 tend to gather in the third region 513. Although the total magnetic flux flowing into the braking member 10 in Example 1 is equivalent to in the conventional example, the magnetic flux density at the inflow portion of the braking member 10 is higher than that in the conventional example by the convergence of the magnetic fluxes M0 in the central region in the circumferential direction. As a result, the braking torque was significantly higher in Example 1 than in the conventional example.

### REFERENCE SIGNS LIST

- 100:: Eddy current retarder
- 10:: Braking member
- 40:: Permanent magnet
- 50:: Pole piece
- 51:: Inner circumferential surface
- 511:: First region
- 512:: Second region
- 52:: Outer circumferential surface
- 53, 54:: Side surface
- 200:: Rotary shaft

## Claims

1. An eddy current retarder comprising:
a braking member that has a cylindrical shape, and is attached to a rotary shaft;
a plurality of permanent magnets that are disposed on an inner side of the braking member in a radial direction, and are lined up in a circumferential direction of the braking member; and
a plurality of pole pieces that are disposed between the braking member and the permanent magnets in the radial direction, and are lined up in the circumferential direction,
wherein each of the permanent magnets has magnetic poles that are arranged in the radial direction and are reversed with respect to magnetic poles of other permanent magnets adjacent in the circumferential direction,
the permanent magnets are configured to rotate in the circumferential direction relative to the pole pieces to switch the eddy current retarder between a braking state and a non-braking state,
each of the pole pieces includes an inner circumferential surface that faces, in the braking state, one of the permanent magnets with a gap in the radial direction, an outer circumferential surface located on an outer side of the inner circumferential surface in the radial direction, and two side surfaces connecting the inner circumferential surface and the outer circumferential surface,
the inner circumferential surface includes:
a first region located forward of a center of the inner circumferential surface in a rotation direction of rotation of the permanent magnets relative to the pole pieces when the eddy current retarder switches from the non-braking state to the braking state, the first region being separated in the radial direction from the permanent magnet that the inner circumferential surface faces at an increasing distance toward a front end side of the inner circumferential surface in the rotation direction in a manner such that the gap is larger on the front end side than at the center; and
a second region located rearward of the center in the rotation direction, the second region being separated in the radial direction from the permanent magnet that the inner circumferential surface faces at an increasing distance toward a rear end side of the inner circumferential surface in the rotation direction in a manner such that the gap is larger on the rear end side than at the center.

2. The eddy current retarder according to claim 1,
wherein the first region has a shape that smoothly expands the gap from the center side toward the front end side.

3. The eddy current retarder according to claim 1 or 2,
wherein the second region has a shape that smoothly expands the gap from the center side toward the rear end side.

4. The eddy current retarder according to claim 1,
wherein the inner circumferential surface has a symmetrical shape with respect to the center when viewed in a cross-section taken along the rotation direction.
